# EUROPÄISCHE PATENTSCHRIFT

(11) **EP 0 391 252 B1**
(45) Veröffentlichungstag und Bekanntmachung des Hinweises auf die Patenterteilung: **08.12.1993**
(21) Anmeldenummer: 90105992.3
(22) Anmeldetag: 29.03.1990
(51) Int. Cl.: C09K 7/06

(54) **Oleophile Alkohole als Bestandteil von Invert-Bohrspülungen**
Oleophilic alcohols as components of invert-emulsion drilling fluids
Alcools oléophiles comme composants d'émulsions de forage inverses

(30) Priorität: 07.04.1989 DE 3911238
(43) Veröffentlichungstag der Anmeldung: 10.10.1990
(73) Patentinhaber: Henkel Kommanditgesellschaft auf Aktien, 40191 Düsseldorf (DE)
(72) Erfinder: Müller, Heinz, D-4019 Monheim (DE); Herold, Claus-Peter, Dr., D-4020 Mettmann (DE); Von Tapavicza, Stephan, Dr., D-4006 Erkrath 2 (DE)

(56) Entgegenhaltungen:
- EP-B- 0 254 412
- WO-A-89/01491
- FR-A- 2 548 548
- US-A- 3 630 898
- US-A- 3 676 348
- US-A- 3 770 636

## Beschreibung

Die Erfindung beschreibt neue Bohrspülflüssigkeiten und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten der ökotoxische Problembereich substantiell vereinfacht wird.

### Zum Stand der Technik

Bohrspülungen auf Ölbasis werden im allgemeinen als sogenannte Invert-Emulsionsschlämme eingesetzt, die aus einem Dreiphasen-System bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds", Journal of Petroleum Technology, 1985, 137 bis 142, sowie R. B. Bennett "New Drilling Fluid Technology - Mineral Oil Mud", Journal of Petroleum Technology, 1984, 975 bis 981, sowie die darin zitierte Literatur.

Die einschlägige Technologie hat seit einiger Zeit die Bedeutung von Ölphasen auf Esterbasis zur Minderung der durch solche Ölspülungen ausgelösten Problematik erkannt. So beschreiben die US-Patentschriften 4,374,737 und 4,481,121 ölbasierte Bohrspülflüssigkeiten in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt. Öle pflanzlichen und/oder tierischen Ursprungs kommen aus praktischen Gründen nicht in Betracht. Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

### Die älteren Vorschläge der Anmelderin

Esteröle der hier betroffenen Art verhalten sich tatsächlich im Einsatz nicht gleich wie die bisher verwendeten Mineralölfraktionen auf reiner Kohlenwasserstoffbasis. Esteröle unterliegen im praktischen Einsatz auch und gerade in W/O-Invert-Bohrspülschlämmen einer partiellen Hydrolyse. Hierdurch werden freie Carbonsäuren gebildet. Die älteren Anmeldungen DE-A-38 42 659 und DE-A-38 42 703 beschreiben die dadurch ausgelösten Probleme und geben Vorschläge zu ihrer Lösung. Weitere Abwandlungen brauchbarer Esteröle sind in den älteren Patentanmeldungen DE-A-39 07 391.2 und DE-A-39 07 392 beschrieben.

Gegenstand dieser älteren Anmeldungen ist die Verwendung von Esterölen auf Basis jeweils ausgewählter Monocarbonsäuren bzw. Monocarbonsäuregemische und einwertiger und gegebenenfalls mehrwertiger Alkohole. Die älteren Anmeldungen schildern, daß mit den dort offenbarten Estern bzw. Estergemischen nicht nur in der frischen Bohrspülung befriedigende rheologische Eigenschaften eingestellt werden können, sondern daß es auch gelingt, unter Mitverwendung ausgewählter bekannter Alkalireserven in der Bohrspülung zu arbeiten und auf diese Weise unerwünschte Korrosion zurückzuhalten. Als Alkalireserve wird - insbesondere beim Einsatz von Esterölen auf Basis von Carbonsäuren mit wenigstens 6 C-Atomen - der Zusatz von Kalk (Calciumhydroxid bzw. lime) und/oder die Mitverwendung von Zinkoxid oder vergleichbaren Zinkverbindungen vorgesehen. Dabei ist allerdings eine zusätzliche Einschränkung zweckmäßig. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 2 lb/bbl Ölspülung angesetzt.

Eine wichtige Weiterentwicklung solcher Invert-Bohrspülungen auf Esterölbasis ist Gegenstand der älteren Anmeldung DE-A-39 03 785 der Anmelderin.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmend größere Mengen an freien Carbonsäuren durch partielle Esterhydrolyse gebildet werden. Diese freiwerdenden Carbonsäuren sollen nicht nur in einer unschädlichen Form abgefangen werden, es soll darüber hinaus möglich sein, diese freien Carbonsäuren gewünschtenfalls zu wertvollen Komponenten mit stabilisierenden bzw. emulgierenden Eigenschaften für das Gesamtsystem umzuwandeln. Vorgesehen ist nach dieser Lehre die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase. Die oleophilen Aminverbindungen können gleichzeitig wenigstens anteilsweise als Alkalireserve der Invert-Bohrspülung Verwendung finden, sie können aber auch in Kombination mit konventionellen Alkalireserven, insbesondere zusammen mit Kalk eingesetzt werden. Bevorzugt ist die Verwendung von oleophilen Aminverbindungen, die wenigstens überwiegend frei sind von aromatischen Bestandteilen. In Betracht kommen insbesondere gegebenenfalls olefinisch ungesättigte aliphatische, cycloaliphatische und/oder heterocyclische oleophile basische Aminverbindungen, die eine oder auch mehrere mit Carbonsäuren zur Salzbildung befähigte N-Gruppierungen enthalten. Die Wasserlöslichkeit bei Raumtemperatur dieser Aminverbindungen beträgt in einer bevorzugten Ausführungsform höchstens etwa 5 Gew.-% und liegt zweckmäßigerweise unter 1 Gew.-%.

Typische Beispiele für solche Aminverbindungen sind wenigstens weitgehend wasserunlösliche primäre, sekundäre und/oder tertiäre Amine, die auch beschränkt alkoxyliert und/oder mit insbesondere Hydroxylgruppen substituiert sein können. Weitere Beispiele sind entsprechende Aminoamide und/oder Stickstoff als Ringbestandteil enthaltende Heterocyclen. Geeignet sind beispielsweise basische Aminverbindungen, die wenigstens einen langkettigen Kohlenwasserstoffrest mit bevorzugt 8 bis 36 C-Atomen, insbesondere mit 10 bis 24 C-Atomen aufweisen, der auch 1- oder mehrfach olefinisch ungesättigt sein kann. Die oleophilen basischen Aminverbindungen können der Bohrspülung in Mengen bis zu etwa 10 lb/bbl, vorzugsweise in Mengen bis zu etwa 5 lb/bbl und insbesondere im Bereich von etwa 0,1 bis 2 lb/bbl zugesetzt werden.

Es hat sich gezeigt, daß die Mitverwendung solcher oleophiler basischer Aminverbindungen Verdickungen des Spülsystems wirkungsvoll verhindern kann, die vermutlich auf einer Störung des W/O-lnvertsystems beruhen und auf die Entstehung freier Carbonsäuren durch Esterhydrolyse zurückzuführen sind.

### Die Aufgabe der Erfindung und ihre technische Lösung

Die vorliegende Erfindung geht von der Aufgabe aus, Systeme der betroffenen Art und insbesondere Bohrspülungen hoher ökologischer Verträglichkeit weiterzuentwickeln. In einer ersten Ausführungsform will die Erfindung Öle bzw. Ölgemische zum Aufbau von Bohrspülungen auf Basis von W/O-Emulsionen zur Verfügung stellen, die technisch brauchbar und leicht zugänglich sind und sich gleichzeitig durch eine hohe ökologische Wertigkeit auszeichnen. In einer weiteren Ausführungsform will die Erfindung Additive für vorbeschriebene Systeme der hier betroffenen Art zugänglich machen, die Bohrspülungen auf W/O-Emulsionsbasis wertvolle Zusatzeigenschaften verleihen, ohne deren ökologische Verträglichkeit nachteilig zu beeinträchtigen.

Die technische Lösung der erfindungsgemäßen Aufgaben geht von der Erkenntnis aus, daß ausgewählte und dem jeweiligen Einsatzzweck angepaßte Alkohole zu neuen und verbesserten Bohrspülungen der angegebenen Art führen können. Bei diesen Alkoholen handelt es sich um wasserunlösliche oder im wesentlichen wasserunlösliche Komponenten, insbesondere also um entsprechende Verbindungen mit ausgeprägt oleophilem Charakter, die sich jedoch von den reinen Kohlenwasserstoffverbindungen durch das Vorliegen der funktionellen Hydroxylgruppen unterscheiden. Hierdurch werden wichtige technologische Verbesserungen zugänglich, gleichzeitig ist die hohe ökologische Verträglichkeit sichergestellt. Nicht-toxische Kohlenwasserstoffverbindungen mit Alkoholfunktionen werden bekanntlich im Kreislauf der belebten Natur mühelos aufgearbeitet.

Gegenstand der Erfindung ist dementsprechend in einer ersten Ausführungsform die Verwendung von im Temperaturbereich von 0 bis 5 °C fließ - und pumpfähigen ein- und/oder mehrwertigen Alkoholen natürlichen oder synthetischen Ursprungs, die bei Raumtemperatur eine Wasserlöslichkeit unter 5 Gew.-% aufweisen, in der geschlossenen Ölphase von Bohrspülungen, die als W/O-Emulsion vorliegen, in der alkoholhaltigen Ölphase eine disperse wäßrige Phase sowie gewünschtenfalls weitere übliche Zusatzstoffe aufweisen und für die umweltschonende Erschließung von beispielsweise Erdöl- bzw. Erdgasvorkommen geeignet sind, wobei
a) die geschlossene Ölphase ausschließlich durch die genannten Alkohole gebildet wird, oder
b) die genannten Alkohole - gelöst in ökologisch verträglichen wasserunlöslichen Ölen - einen substantiellen Anteil der geschlossenen Ölphase ausmachen und dabei diese zu mehr als 10 Gew.-% bilden oder dieser in Mengen von 0,1 bis 10 Gew.-% zugesetzt sind.

In einer weiteren Ausführungsform betrifft die Erfindung Invert-Bohrspülungen der geschilderten Art, die in einer geschlossenen Ölphase eine disperse wäßrige Phase zusammen mit üblichen weiteren Hilfsstoffen, vorzugsweise Emulgatoren, Beschwerungsmitteln, fluid-loss-Additiven und Alkalireserven enthalten und dadurch gekennzeichnet sind, daß sie in der geschlossenen Ölphase ein- und/oder mehrwertige Alkohole natürlichen oder synthetischen Ursprungs enthalten, die im Temperaturbereich von 0 bis 5 °C fließ- und pumpfähig sind und bei Raumtemperatur eine Wasserlöslichkeit unter 5 Gew.-% aufweisen, wobei
a) die geschlossene Ölphase ausschließlich durch die genannten Alkohole gebildet wird, oder
b) die genannten Alkohole - gelöst in ökologisch verträglichen wasserunlöslichen Ölen - einen substantiellen Anteil der geschlossenen Ölphase ausmachen und dabei diese zur mehr als 10 Gew.-% bilden oder dieser in Mengen von 0,1 bis 10 Gew.-% zugesetzt sind,
und wobei die jeweilige Ölphase im Temperaturbereich von 0 bis 5 °C fließ- und pumpfähig ist und Flammpunkte oberhalb 80 °C aufweist.

### Die verschiedenen Ausführungsformen der Erfindung

In einer ersten Ausführungsform wird die geschlossene Ölphase der Invert-Bohrspülungen ausschließlich oder weitaus überwiegend durch die im wesentlichen wasserunlöslichen und vorzugsweise ausgeprägt oleophilen Alkohole gebildet. Verständlicherweise muß hier die Rheologie der eingesetzten Alkohole den technischen Anforderungen der Bohrspülungen angepaßt sein. Leichte rheologische Korrekturen sind durch Mitverwendungen der in dieser Ausführungsform vorgesehenen geringen Mengen an Verdünnungsmitteln möglich. In Betracht kommen im hier geschilderten Fall insbesondere Ölphasen, die zu mehr als 70 Gew.-%, vorzugsweise zu mehr als 80 Gew.-% und gewünschtenfalls ausschließlich durch die Alkohole als solche gebildet wird. Zu den rheologischen Anforderungen solcher Öle für das Einsatzgebiet der Bohrspülflüssigkeiten gilt das allgemeine Fachwissen, auf das im nachfolgenden noch einmal eingegangen wird. Aus dem breiten Bereich ausgeprägt oleophiler Alkohole mit insbesondere geradkettiger und/oder verzweigter Kohlenwasserstoffstruktur kommen hier in erster Linie einwertige Alkohole mit wenigstens 6 oder 7 C-Atomen, vorzugsweise mit wenigstens 8 C-Atomen in Betracht, wobei die mögliche Obergrenze der C-Zahl durch die Struktur des Kohlenwasserstoffrestes stark beeinflußt wird.

Bevorzugt weisen derartige einwertige Alkohole, die gewünschtenfalls anteilsweise olefinisch ungesättigt sein können, bis zu 36 C-Atomen auf. Die Rheologie verzweigtkettiger und/oder ungesättigter Alkohole der hier betroffenen Art erfüllt bekanntlich die Anforderungen an Fließ- und Pumpfähigkeit auch bei niederen Temperaturen leichter als das geradkettige gesättigte Kohlenwasserstoffgerüst. Gesättigte geradkettige Fettalkohole des Bereichs C_{16/18} haben bekanntlich Erstarrungsbereiche um 50 °C, während der olefinisch ungesättigte Oleylalkohol unterhalb 4 °C erstarrt. Verzweigte Alkohole des gleichen C-Zahlbereichs können - in Abhängigkeit vom Ausmaß und Grad der Verzweigung - durchaus brauchbare fließ- und pumpfähige Ölphasen im Sinne der Erfindung darstellen. Geeignet ist auf dem Gebiet der gesättigten einwertigen Alkohole allerdings insbesondere der Bereich niedriger Kohlenstoffzahlen, insbesondere also der Bereich von C₈₋₁₄, wobei auch hier den verzweigtkettigen Alkoholen rheologische Vorteile zukommen können.

Die in dieser Ausführungsform in geringen Mengen gegebenenfalls mitverwendeten Öl-Mischungskomponenten können reine, insbesondere aromatenfreie Kohlenwasserstoffverbindungen, insbesondere aber ausgewählte Esteröle der in den genannten älteren Anmeldungen der Anmelderin geschilderten Art sein.

Der Eigenrheologie der erfindungsgemäß eingesetzten Alkoholkomponenten kommt zunehmend geringere Bedeutung zu je größer in der Abmischung mit einer oder mehreren Ölkomponenten der Anteil dieser Mischungsbestandteile wird. Eine zweite Ausführungsform der Erfindung betrifft dementsprechend den Einsatz von Ölphasen in Systemen der betroffenen Art, die doch immerhin schon beträchtliche oder gar überwiegende Mengen an nichtwassermischbaren Ölen aufweisen, die in Abmischung mit den erfindungsgemäß vorgesehenen ausgeprägt oleophilen Alkoholen verwendet werden. Der Gehalt an erfindungsgemäß ausgewählten Alkoholen liegt in dieser Ausführungsform in der Regel oberhalb von 10 Gew.-% bis 70 Gew.-% - jeweils bezogen auf die flüssige Ölphase - wobei Alkoholanteile in Mengen von wenigstens 35 Gew.-% und vorzugsweise wenigstens 50 Gew.-% der Ölphase bevorzugt sein können. Die Rheologie solcher Systeme wird schon sehr weitgehend durch die Beschaffenheit der als Mischungskomponenten eingesetzten Verbindungen bestimmt. Es wird jedoch noch gezeigt werden, daß auch für diese Ausführungsformen die erfindungsgemäß vorgesehene Mitverwendung von Alkoholen beträchtliche praktische Bedeutung haben kann.

Als Mischungskomponenten für diese zweite Ausführungsform der Erfindung kommen wiederum sowohl reine insbesondere aromatenfreie Kohlenwasserstofföle als auch vor allem Esteröle der in den älteren Anmeldungen der Anmelderin geschilderten Art in Betracht. In den Rahmen der Erfindung fallen auch Abmischungen dieser Typen, wobei sowohl Abmischungen von Esterölen mit reinen Kohlenwasserstoffverbindungen als auch Mischungen verschiedener Esteröltypen Mischungskomponenten für den gemeinsamen Einsatz mit den oleophilen Alkoholen darstellen können. In bevorzugten Ausführungsformen der Erfindung werden die keinerlei funktionellen Gruppen aufweisenden reinen Kohlenwasserstofföle in der Ölphase in Mengen von höchstens 50 Gew.-%, vorzugsweise von höchstens 35 Gew.-% und insbesondere in Mengen von höchstens 25 Gew.-% - jeweils bezogen auf die Ölphase - eingesetzt. In den wichtigsten Ausführungsformen der hier beschriebenen Variante werden als Ölphase Mischungen aus den erfindungsgemäß definierten Alkoholen und Esterölen ohne Zusatz von reinen Kohlenwasserstoffverbindungen verwendet.

Die Erfindung betrifft schließlich in einer dritten Variante die Mitverwendung der praktisch wasserunlöslichen Alkohole mit insbesondere ausgeprägt oleophilem Charakter als Additiv in der Ölphase vorbeschriebener Bohrspülungen auf Basis von W/O-Emulsionen. Die Menge der erfindungsgemäß eingesetzten Alkohole liegt hier üblicherweise im Bereich von 0,1 bis maximal 10 Gew.-%, vorzugsweise im Bereich von 1 bis 5 Gew.-% der Ölphase. Der Kreis an geeigneten wasserunlöslichen Alkoholen kann sich in dieser Ausführungsform begreiflicherweise substantiell erweitern. Die Rheologie des Gesamtsystems wird hier nicht mehr durch die rheologischen Werte des Alkohols bestimmt. Gerade in dieser Ausführungsform der Verwendung der erfindungsgemäß definierten Alkohole als Additiv werden aber wichtige Verbesserungen im Verhalten von Bohrspülungen vorbeschriebener Art erreicht.

Insbesondere gilt das für Invert-Systeme, in denen die Hauptkomponente der geschlossene Ölphase ausschließlich oder überwiegend durch Esteröle der in den genannten älteren Anmeldungen der Anmelderin beschriebenen Art gebildet wird. In der hier betroffenen Ausführungsform liegen als Hauptkomponenten für die Ölphase dementsprechend mindestens 25 Gew.-%, vorzugsweise mindestens 50 Gew.-% und insbesondere wenigstens 75 bis 80 Gew.-% der Ölphase als Esteröl vor. Zum Rest können reine Kohlenwasserstofföle des Standes der Technik mitverwendet werden, wobei aber zweckmäßigerweise darauf ganz verzichtet wird.

Im Sinne der vorliegenden Erfindung ist es daher bevorzugt, daß bei der Mitverwendung von ökologisch verträglichen Ölen in der geschlossenen Ölphase Esteröle wenigstens ein Drittel, vorzugsweise den überwiegenden Anteil dieser ökologisch verträglichen Öle ausmachen.

Durch den Zusatz der erfindungsgemäß definierten wasserunlöslichen Alkohole zu Invert-Systemen können wichtige Verbesserungen für den praktischen Einsatz der Bohrspülungen eingestellt werden. Betroffen sind insbesondere die folgenden vier Teilaspekte: Verringerung der fluid-loss-Werte, die Erleichterung und Verbesserung der Emulgierung der dispersen wäßrigen Phase, eine gegebenenfalls deutlich verbesserte Schmierwirkung der Bohrspülflüssigkeit sowie gegebenenfalls eine deutliche Verbesserung der rheologischen Eigenschaften von Invert-Bohrspülungen auf Esterölbasis.

### Die erfindungsgemäß eingesetzten Alkoholkomponenten

Die Verwendung der Alkohole als Ölphase aber auch ihre Mitverwendung als mengenmäßig untergeordneter oder übergeordneter Anteil in der Ölphase fordert die hinreichende Wasserunlöslichkeit dieser Alkoholkomponenten. Bevorzugt liegt bei Raumtemperatur die Wasserlöslichkeit geeigneter Alkohol unter 1 Gew.-% und insbesondere bei nicht mehr als 0,5 Gew.-%.

Zur chemischen Beschaffenheit gelten die nachfolgenden allgemeinen Gesetzmäßigkeiten: Es sind einwertige und/oder mehrwertige Alkohole geeignet, solange der oleophile Charakter der alkoholischen Komponente gewahrt bleibt. Insbesondere kommen in Betracht neben den einwertigen Alkoholen zweiwertige Verbindungen und/oder Partialether von mehrwertige Alkoholen mit wenigstens einer freien Hydroxylgruppe. Die Alkohole selber sollen ökologisch verträglich sein und besitzen dementsprechend in der bevorzugten Ausführungsform keine aromatischen Bestandteile. Geradkettige und/oder verzweigte aliphatische oder auch entsprechende ungesättigte, insbesondere ein- und/oder mehrfach olefinisch ungesättigte Alkohole sind die bevorzugten Verbindungen. Cycloaliphatische Alkohole können in Betracht gezogen werden.

Ein wichtiges allgemeines Erfordernis ist im Sinne des erfindungsgemäßen Handelns, daß diese Alkohole als solche nicht nur ökologisch verträglich sind, sondern auch keine sonstigen toxikologischen insbesondere keine inhalationstoxikologischen Gefährdungen auslösen. Alkohole ausgeprägter Oleophilie, wie sie erfindungsgemäß gefordert werden, zeichnen sich allerdings in aller Regel durch eine so geringe Flüchtigkeit aus, daß diese Anforderung ohnehin erfüllt ist.

Für die Abmischung der erfindungsgemäß eingesetzten Alkohole mit Esterölen gilt zusätzlich das folgende: Die erfindungsgemäß eingesetzten freien Alkohole können gleich oder verschieden sein von den Alkoholkomponenten, die im Esteröl zum Einsatz kommen.

Im Sinne der vorliegenden Erfindung werden als ökologisch verträgliche Öle und somit als Mischungskomponente bevorzugt solche Esteröle eingesetzt, die im Temperaturbereich von 0 bis 5 °C fließ- und pumpfähig sind und sich insbesondere von Monocarbonsäuren sowie von ein- und/oder zweiwertigen Alkoholen ableiten. Hierbei ist die Ester-bildende Alkoholkomponente insbesondere so ausgewählt, daß auch im praktischen Einsatz unter partieller Esterverseifung keine toxikologischen, insbesondere keine inhalations-toxikologischen Gefährdungen ausgelöst werden.

Während in den Esterölen die Alkoholkomponente beispielsweise durch Überlegungen zur Rheologie des Esteröles und/oder zur Zugänglichkeit der Ester-bildenden Alkohole bestimmt ist, ist der erfindungsgemäße Einsatz der freien Alkohole auf die angestrebten Verbesserungen der Invert-Bohrspülung abgestellt.

Kommen die Alkohole in der Ölphase als substantieller Anteil, als überwiegender Anteil oder gar als ausschließliche Verbindung zum Einsatz, dann sollen die Alkohole bei niederen Temperaturen, insbesondere im Bereich von 0 bis 5 °C fließ- und pumpfähig oder mit den begrenzten Mengen an ökologisch verträglichen Mischungskomponenten zur fließfähigen Phase zu verflüssigen sein. Die Erstarrungswerte solcher Ölphasen (Fließ- und Stockpunkt) sollen unter 0 °C, vorzugsweise unterhalb - 5 °C und insbesondere unterhalb - 10 °C liegen. Die Alkohole selber sollen dabei Flammpunkte von wenigstens 80 °C, vorzugsweise von wenigstens 100 °C und insbesondere von wenigstens 120 °C aufweisen. Neben den bereits genannten einwertigen Alkoholen mit wenigstens 8 C-Atomen und der durch Struktur und Rheologieanforderung bestimmten oberen C-Zahl kommen hier auch ausgewählte Polyole oder deren Partialether in Betracht. Geeignete Polyole sind insbesondere gegebenenfalls verzweigtkettige Diole mit einem hinreichenden Ausmaß des oleophilen Kohlenwasserstoffrestes im Molekül. Geeignet sind beispielsweise oleophile Diole mit Hydroxylgruppen in Alpha,Omega-Stellung und/oder Diole, die ihre Hydroxylgruppen an benachbarten Kohlenstoffatomen aufweisen. Charakteristische Beispiele für Verbindungen dieser Art sind die Verseifungsprodukte von epoxidierten Olefinen. In Betracht kommen insbesondere aber auch Partialether solcher Diole mit einwertigen Alkoholen.

Insbesondere in den Ausführungsformen, in denen die Rheologie des Gesamtsystems überwiegend durch die wasserunlöslichen Mischungskomponenten, insbesondere also durch die Esteröle bestimmt wird, besteht zunehmende Freiheit in der Auswahl geeigneter Alkoholkomponenten. Als brauchbare Additive haben sich hier unter anderem weitgehend wasserunlösliche Polyalkylenglycolether bzw. entsprechende Mischether von niederen Alkylenglycolen erwiesen. So sind beispielsweise entsprechende Mischether von Ethylenoxid und Propylenoxid auch dann brauchbare Zusatzstoffe im Sinne der Erfindung, wenn sie Molekulargewichte von beispielsweise 5000 erreichen und dabei im Gesamtsystem hinreichende Wasserunlöslichkeit zeigen. Verbindungen der zuletzt genannten Art haben Bedeutung insbesondere in der Ausführungsform, die den Zusatz der wasserunlöslichen Alkohole als Additiv in einer Menge mit maximal 10 Gew.-% zum Gegenstand hat.

In einer wichtigen Ausführungsform der Erfindung werden wasserunlösliche Alkohole eingesetzt, die ihrerseits frei sind von basischen Aminogruppen und vorzugsweise auch keine anderen reaktiven Gruppen, beispielsweise Carboxylgruppen enthalten.

### Die Mischungskomponenten in der Ölphase

Zur Abmischung im Rahmen der Erfindung geeignete Ölkomponenten sind die in der heutigen Praxis der Bohrspülungen eingesetzten Mineralöle und dabei bevorzugt im wesentlichen aromatenfreie aliphatische und/oder cycloaliphatische Kohlenwasserstofffraktionen der geforderten Fließeigenschaften. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche Esteröle wie sie insbesondere in den genannten älteren Anmeldungen DE-A-38 42 659, 38 42 703, 39 07 391 und 39 07 392 geschildert sind. Zur Vervollständigung der Erfindungsoffenbarung werden im nachfolgenden wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus einwertigen Alkoholen mit 2 bis 12, insbesondere mit 6 bis 12 C-Atomen und aliphatisch gesättigten Monocarbonsäuren mit 12 bis 16 C-Atomen oder deren Abmischung mit gleichen Mengen anderer Monocarbonsäuren als Ölphase mitverwendet. Bevorzugt sind dabei Esteröle, die zu wenigstens 60 Gew.-% - bezogen auf das jeweilige Carbonsäuregemisch - Ester aliphatischer C₁₂₋₁₄-Monocarbonsäuren sind und gewünschtenfalls zum Rest auf untergeordnete Mengen kürzerkettiger aliphatischer und/oder längerkettiger, dann insbesondere 1- und/oder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens 30 mPas besitzen. Die im Bohrschlamm eingesetzten Ester zeigen Erstarrungswerte (Fließ- und Stockpunkt) unterhalb - 10 °C, vorzugsweise unterhalb - 15 °C und besitzen dabei insbesondere Flammpunkte oberhalb 100 °C, vorzugsweise oberhalb 150 °C. Die im Ester bzw. Estergemisch vorliegenden Carbonsäuren sind geradkettig und/oder verzweigt und dabei pflanzlichen und/oder synthetischen Ursprungs. Sie können sich von entsprechenden Triglyceriden wie Kokosöl, Palmkernöl und/oder Babassuöl ableiten. Die Alkoholreste der eingesetzten Ester leiten sich insbesondere von geradkettigen und/oder verzweigten gesättigten Alkoholen mit vorzugsweise 6 bis 10 C-Atomen ab. Auch diese Alkoholkomponenten können pflanzlichen und/oder tierischen Ursprungs und dabei durch reduktive Hydrierung entsprechender Carbonsäureester gewonnen worden sein.

Eine weitere Klasse besonders geeigneter Esteröle leitet sich von olefinisch 1- und/oder mehrfach ungesättigten Monocarbonsäuren mit 16 bis 24 C-Atomen oder deren Abmischungen mit untergeordneten Mengen anderer, insbesondere gesättigter Monocarbonsäuren, und einwertigen Alkoholen mit bevorzugt 6 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr 80 Gew.-% und insbesondere zu mehr als 90 Gew.-% von olefinisch ungesättigten Carbonsäuren des Bereichs von C₁₆₋₂₄ ableiten.

Auch hier liegen die Erstarrungswerte (Fließ- und Stockpunkt) unterhalb - 10 °C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield(RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten C₁₆₋₂₄-Monocarbonsäurereste zu nicht mehr als 35 Gew.-% von 2- und mehrfach olefinisch ungesättigten Säuren ab, wobei bevorzugt wenigstens 60 Gew.-% der Säurereste einfach olefinisch ungesättigt sind. In der zweiten Ausführungsform leiten sich die im Estergemisch vorliegenden C₁₆₋₂₄-Monocarbonsäuren zu mehr als 45 Gew.-%, vorzugsweise zu mehr als 55 Gew.-% von 2- und/oder mehrfach olefinisch ungesättigten Säuren ab. Im Estergemisch vorliegende gesättigte Carbonsäuren des Bereiches C_{16/18} machen zweckmäßigerweise nicht mehr als 20 Gew.-% und insbesondere nicht mehr als 10 Gew.-% aus. Bevorzugt liegen gesättigte Carbonsäureester aber im Bereich niedrigerer C-Zahlen der Säurereste. Die vorliegenden Carbonsäurereste können pflanzlichen und/oder tierischen Ursprungs sein. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

Eine weitere interessante Klasse von Esterölen, die als Mischungskomponente im Rahmen des erfindungsgemäßen Handelns mitverwendet werden kann, sind bei Raumtemperatur fließfähige und Flammpunkte oberhalb 80 °C aufweisende Ester aus C₁₋₅-Monocarbonsäuren und ein- und/oder mehrwertigen Alkoholen, die bevorzugt auch im Temperaturbereich von 0 bis 5 °C fließ- und pumpfähig sind. Geeignet sind dabei insbesondere entsprechende Ester dieser niederen Carbonsäuren mit einwertigen Alkoholen mit wenigstens 8 C-Atomen und/oder Ester dieser Säuren mit 2- bis 4-wertigen Alkoholen mit vorzugsweise 2 bis 6 C-Atomen. Als Ester-bildende Säurekomponente dieser Klasse eignet sich aus praktischen Gründen insbesondere die Essigsäure. Maßzahlen zur Rheologie und Flüchtigkeit bzw. den Erstarrungswerten bevorzugter Ester dieser Unterklasse entsprechen den zuvor genannten Werten.

Geeignet sind als Mischungskomponenten aus dieser Unterklasse insbesondere Ester von einwertigen Alkoholen natürlichen und/oder synthetischen Ursprungs, deren Kettenlange beim Vorliegen überwiegend aliphatisch gesättigter Alkohole im Bereich von C₈₋₁₅, im Falle 1- und mehrfach olefinisch ungesättigter Alkohole, aber auch bei höheren C-Zahlen, beispielsweise bis C₂₄ liegen kann. Einzelheiten finden sich in der älteren Patentanmeldung DE-A-39 07 391 der Anmelderin.

Geeignete Mischungskomponenten sind schließlich aber die in der parallelen Anmeldung DE-A-39 07 392 beschriebenen Ester aus Monocarbonsäuren synthetischen und/oder natürlichen Ursprungs mit 6 bis 11 C-Atomen und 1 - und/oder mehrwertigen Alkoholen, die bevorzugt auch im Temperaturbereich von 0 bis 5 °C fließ- und pumpfähig sind. Zur Vervollständigung der Erfindungsoffenbarung wird insoweit auf die genannte Parallelanmeldung verwiesen, deren Inhalt - ebenso wie der der zuvor genannten Anmeldung - hiermit zum Gegenstand auch der vorliegenden Offenbarung gemacht wird.

In den Rahmen der Erfindung fallen Mehrstoffgemische, die zusammen mit den erfindungsgemäß definierten Alkoholen eine oder mehrere der hier im einzelnen aufgezählten Mischungskomponenten enthalten können. Dabei sind grundsätzlich beliebige Abmischungen verwendbar, soweit sie die rheologischen Grundforderungen für Invert-Bohrspülungen der hier betroffenen Art erfüllen. Als Beispiele für solche Mehrkomponentengemische seien Materialien auf Basis verschiedener Typen an Esterölen oder aber auch zusätzlich Mineralöl enthaltende Stoffmischungen genannt.

Im Sinne der vorliegenden Erfindung ist es ferner bevorzugt, daß die in der Invert-Bohrspülung eingesetzte geschlossene Ölphase im Temperaturbereich von 0 bis 5 °C eine Brookfield(RVT)-Viskosität von nicht mehr als 55 mPas, vorzugsweise unterhalb 50 mPas, und insbesondere nicht über 45 mPas, vorzugsweise nicht über 40 mPas, aufweist.

### Weitere Mischungskomponenten der Invert-Bohrspülung

In Betracht kommen hier alle üblichen Mischungsbestandteile zur Konditionierung und für den praktischen Einsatz der Invert-Bohrspülschlämme, wie sie nach der heutigen Praxis mit Mineralölen als geschlossene Ölphase zur Verwendung kommen. Neben der dispersen wäßrigen Phase kommen hier insbesondere Emulgatoren, Beschwerungsmittel, fluid-loss-Additive, Viskositätsbildner und Alkalireserven in Betracht.

Werden im Rahmen der Erfindung Esteröle als Mischungskomponenten mitverwendet - und hierbei insbesondere Esteröle auf Basis von Carbonsäuren mit wenigstens 6 C-Atomen -, kann es zweckmäßig sein, in der Ölspülung keine wesentlichen Mengen stark hydrophiler Basen anorganischer und/oder organischer Art mitzuverwenden. Kalk kann wirkungsvoll als Alkalireserve mitverwendet werden. Es ist dann allerdings zweckmäßig, die maximal einzusetzende Kalkmenge mit 2 lb/bbl zu beschränken, wobei es bevorzugt sein kann, mit Bohrschlammbeladungen an Kalk zu arbeiten, die leicht darunter liegen, beispielsweise also im Bereich von 1 bis 1,8 lb/bbl (Kalk/Bohrspülung) liegen. Neben oder anstelle des Kalks können andere Alkalireserven bekannter Art zum Einsatz kommen. Genannt seien hier insbesondere die weniger basischen Metalloxide von der Art des Zinkoxids. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben.

Weiterhin gilt das folgende:
Invert-Bohrspülschlämme der hier betroffenen Art enthalten üblicherweise zusammen mit der geschlossenen Ölphase die feindisperse wäßrige Phase in Mengen von 5 bis 45 Gew.-% und vorzugsweise in Mengen von 5 bis 25 Gew.-%. Dem Bereich von 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von 10 bis 60 mPas, bevorzugt von 15 bis 40 mPas, Fließgrenze (Yield Point YP) im Bereich von 5 bis 40 lb/100 ft², bevorzugt von 10 bis 25 lb/100 ft² - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:
Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-A-4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulgatoren der hier betroffenen Art werden im Handel als hochkonzentrierte Wirkstoffaufbereitungen vertrieben und können beispielsweise in Mengen von 2,5 bis 5 Gew.-%, insbesondere in Mengen von 3 bis 4 Gew.-% - jeweils bezogen auf Ölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von 15 bis 20 lb/bbl oder im Bereich von 5 bis 7 Gew.-% - bezogen auf die Ölphase.

In Bohrspülungen der hier betroffenen Art ist der üblicherweise eingesetzte Viskositätsbildner ein kationisch modifizierter feinteiliger Bentonit, der insbesondere in Mengen von 8 bis 10 lb/bbl oder im Bereich von 2 bis 4 Gew.-%, bezogen auf Ölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis 2,5 und vorzugsweise im Bereich von 1,3 bis 1,6 zu erhöhen.

Die disperse wäßrige Phase wird in Invert-Bohrspülungen der hier betroffenen Art mit löslichen Salzen beladen. Überwiegend kommen hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB-A-2 158 437, EP-A-229 912 und DE-A-32 47 123.

Zur Umrechung der im hier betroffenen Zusammenhang im fach-technischen Gebrauch üblichen Maßzahlen, die nicht dem metrischen System entsprechen - und in diesem üblichen Sprachgebrauch in der Erfindungsbeschreibung und den nachfolgenden Beispielen benutzt sind - gelten die folgenden Umrechnungsfaktoren:
1 lb = 0,454 kg; 1 bbl = 159 l;
1 lb/bbl = 2,85 kg/m³, insbesondere im Zusammenhang mit Zusatzmenge der Alkalireserve;
1 lb/100 ft² = 0,4788 Pa, insbesondere im Zusammenhang mit Bestimmung der Fließgrenze (YP) und der Gelstärke.

### Beispiele

### Beispiele 1 bis 4

In den nachfolgenden Beispielen 1 bis 4 werden Invert-Spülungen auf Basis ausgewählter Alkohole bzw. auf Basis von Alkoholgemischen bei einem Verhältnis von Öl/Wasser von 80/20 in der nachfolgenden Grundrezeptur eingesetzt:
200 ml Alkohol
50,9 ml Wasser
1,5 g organophiler Bentonit (Geltone II der Fa. NL Baroid)
1,9 g Diethanolamin
7,8 g organophiler Lignit (Duratone der Fa. NL Baroid)
7,8 g W/O-Emulgator (EZ-mul NT der Fa. NL Baroid)
326,2 g Baryt
17,5 g KCl
Zunächst wird an der jeweils geprüften Invert-Bohrspülung durch Viskositätsmessung bei 50 °C am ungealterten Material die Plastische Viskosität (PV), die Fließgrenze (YP) sowie die Gelstärke nach 10 sec. und 10 min. bestimmt.

Anschließend wird Invert-Bohrspülung 16 Stunden bei 125 °C im Autoklaven im sogenannten "Roller-oven" gealtert, um den Temperatureinfluß auf die Emulsionsstabilität zu überprüfen. Danach werden erneut die Viskositätswerte bei 50 °C bestimmt.

Die in diesen Beispielen eingesetzten Ölphasen - d. h. die jeweiligen Alkohole bzw. Alkoholgemische - sind die folgenden:
Beispiel 1: Synthetischer Oxoalkohol der Kettenlänge C₁₀ (Handelsprodukt "Etoxo C 10")
Beispiel 2: 100 ml des synthetischen Alkohols aus Beispiel 1 in Abmischung mit 100 ml eines C₈₋₁₀-Alkoholgemisches natürlichen Ursprungs (Handelsprodukt "Lorol 810" der Anmelderin)
Beispiel 3: 100 ml des Alkohols gemäß Beispiel 1 in Abmischung mit 100 ml eines C₁₂₋₁₈-Alkoholgemisches natürlichen Ursprungs (Handelsprodukt "Lorol technisch" der Anmelderin)
Beispiel 4: Synthesealkoholgemisch C_{12/13} (Handelsprodukt "Lial 123")
Am jeweils ungealterten und am gealterten Material werden die folgenden Werte bestimmt:

### Beispiel 1

| | ungealtertes Material | gealtertes Material |
|---|---|---|
| Plastische Viskosität (PV) | 45 | 55 |
| Fließgrenze (YP) | 29 | 39 |

| Gelstärke (lb/100 ft²) | | |
|---|---|---|
| 10 sec. | 15 | 15 |
| 10 min. | 14 | 15 |

### Beispiel 2

| | ungealtertes Material | gealtertes Material |
|---|---|---|
| Plastische Viskosität (PV) | 36 | 47 |
| Fließgrenze (YP) | 33 | 21 |

| Gelstärke (lb/100 ft²) | | |
|---|---|---|
| 10 sec. | 10 | 5 |
| 10 min. | 13 | 6 |

### Beispiel 3

| | ungealtertes Material | gealtertes Material |
|---|---|---|
| Plastische Viskosität (PV) | 80 | 62 |
| Fließgrenze (YP) | 51 | 27 |

| Gelstärke (lb/100 ft²) | | |
|---|---|---|
| 10 sec. | 28 | 6 |
| 10 min. | 29 | 9 |

### Beispiel 4

| | ungealtertes Material | gealtertes Material |
|---|---|---|
| Plastische Viskosität (PV) | 85 | 108 |
| Fließgrenze (YP) | 45 | 53 |

| Gelstärke (lb/100 ft²) | | |
|---|---|---|
| 10 sec. | 35 | 40 |
| 10 min. | 38 | 40 |

### Beispiele 5 bis 8

Es werden Vergleichsversuche mit einer Ölspülung der nachfolgenden Zusammensetzung durchgeführt.
200 ml Ölphase
50,9 ml Wasser
1,9 g Kalk
7,8 g organophiler Lignit (Duratone der Fa. NL Baroid)
326,2 g Baryt
17,9 g CaCl₂ x 2 H₂O
In dieser Spülungsformulierung wird auf die Mitverwendung eines W/O-Emulgators verzichtet. Im einzelnen werden in diesen Beispielen 5 bis 8 die folgenden Alkohole bzw. Alkohol/Esterölgemische eingesetzt.
Beispiel 5: C_{8/10}-Alkoholschnitt natürlichen Ursprungs (Handelsprodukt "Lorol 810" der Anmelderin)
Beispiel 6: Ein Gemisch aus 102 ml des Alkohols gemäß Beispiel 5 und 98 ml Isobutyloleat
Beispiel 7: Synthetischer Oxoalkohol C₁₃ (Isotridecylalkohol)
Beispiel 8: Oxoöl
Die jeweils am ungealterten und dann am gealterten Material bestimmten Viskositätswerte sind die folgenden:

### Beispiel 5

| | ungealtertes Material | gealtertes Material |
|---|---|---|
| Plastische Viskosität (PV) | 53 | 40 |
| Fließgrenze (YP) | 23 | 10 |

| Gelstärke (lb/100 ft²) | | |
|---|---|---|
| 10 sec. | 9 | 3 |
| 10 min. | 15 | 3 |

### Beispiel 6

| | ungealtertes Material | gealtertes Material |
|---|---|---|
| Plastische Viskosität (PV) | 36 | 28 |
| Fließgrenze (YP) | 17 | 21 |

| Gelstärke (lb/100 ft²) | | |
|---|---|---|
| 10 sec. | 7 | 11 |
| 10 min. | 10 | 13 |

### Beispiel 7

| | ungealtertes Material | gealtertes Material |
|---|---|---|
| Plastische Viskosität (PV) | 85 | 108 |
| Fließgrenze (YP) | 45 | 53 |

| Gelstärke (lb/100 ft²) | | |
|---|---|---|
| 10 sec. | 35 | 40 |
| 10 min. | 38 | 40 |

### Beispiel 8

| | ungealtertes Material | gealtertes Material |
|---|---|---|
| Plastische Viskosität (PV) | 45 | 55 |
| Fließgrenze (YP) | 29 | 39 |

| Gelstärke (lb/100 ft²) | | |
|---|---|---|
| 10 sec. | 14 | 15 |
| 10 min. | 15 | 15 |

### Beispiele 9 bis 12

Es wird mit einer Rezeptur der folgenden Grundzusammensetzung gearbeitet.
200 ml Ölphase
50,9 ml Wasser
1,2 g organophiler Bentonit ("Geltone II" der Fa. NL Baroid)
1,9 g Kalk
7,8 g organophiler Lignit ("Duratone" der Fa. NL Baroid)
7,8 g W/O-Emulgator ("EZ-mul NT" der Fa. NL Baroid)
326,2 g Baryt
17,9 g CaCl₂ x 2 H₂O
In diesen Beispielen 9 bis 12 werden als Ölphase Gemische aus einem Esteröl auf Rübölbasis und dem eingangs genannten C_{8/10}-Alkoholgemisch ("Lorol 810") bei zunehmenden Mischungsanteilen des C_{8/10}-Alkoholschnitts eingesetzt.

Als Esteröl wird ein undestillierter lsobutyl-Rübölester verwendet, der auf einer Mischung überwiegend ungesättigter geradkettiger Carbonsäuren aufgebaut ist, die etwa der folgenden Verteilung entsprechen: 60 % Ölsäure, 2 % Linolsäure, 9 bis 10 % Linolensäure, olefinisch ungesättigte C_{20/22}-Monocarbonsäuren etwa 4 %, zum Rest gesättigte Monocarbonsäuren überwiegend des Bereichs C_{16/18}. Dieser Rübölester besitzt weiterhin die folgenden Kenndaten:
Dichte (20 °C) 0,872 g/cm³; Fließpunkt unterhalb - 15 °C; Flammpunkt (DIN 51584) oberhalb 180 °C; Säurezahl (DGF-C-V 2) 1,2; Viskosität bei 0 °C 32 mPas, Viskosität bei 5 °C 24 mPas; kein Gehalt an Aromaten.

Die Mischungsverhältnisse Rübölester/Lorol 810 werden wie folgt gewählt und in Richtung auf zunehmenden Lorol 810-Gehalt verschoben:
Beispiel 9: 170 ml Esteröl/30 ml Alkoholschnitt
Beispiel 10: 150 ml Esteröl/50 ml Alkoholschnitt
Beispiel 11: 120 ml Esteröl/80 ml Alkoholschnitt
Beispiel 12: 100 ml Esteröl/100 ml Alkoholschnitt
Die jeweils an ungealterten und angealterten Bohrspülungen bestimmten Viskositätswerte sind die folgenden:

### Beispiel 9

| | ungealtertes Material | gealtertes Material |
|---|---|---|
| Plastische Viskosität (PV) | 60 | 43 |
| Fließgrenze (YP) | 62 | 39 |

| Gelstärke (lb/100 ft²) | | |
|---|---|---|
| 10 sec. | 33 | 19 |
| 10 min. | 34 | 21 |

### Beispiel 10

| | ungealtertes Material | gealtertes Material |
|---|---|---|
| Plastische Viskosität (PV) | 45 | 39 |
| Fließgrenze (YP) | 51 | 39 |

| Gelstärke (lb/100 ft²) | | |
|---|---|---|
| 10 sec. | 25 | 17 |
| 10 min. | 28 | 19 |

### Beispiel 11

| | ungealtertes Material | gealtertes Material |
|---|---|---|
| Plastische Viskosität (PV) | 45 | 33 |
| Fließgrenze (YP) | 40 | 24 |

| Gelstärke (lb/100 ft²) | | |
|---|---|---|
| 10 sec. | 19 | 13 |
| 10 min. | 22 | 14 |

### Beispiel 12

| | ungealtertes Material | gealtertes Material |
|---|---|---|
| Plastische Viskosität (PV) | 36 | 28 |
| Fließgrenze (YP) | 17 | 21 |

| Gelstärke (lb/100 ft²) | | |
|---|---|---|
| 10 sec. | 7 | 11 |
| 10 min. | 10 | 13 |

### Vergleichsbeispiel und Beispiele 13 bis 15

In dem nachfolgenden Vergleichsbeispiel und den Beispielen 13 bis 15 wird mit Bohrspülungen der folgenden Rezeptur gearbeitet:
200 ml Esteröl
50,9 ml Wasser
1,2 g organophiler Bentonit ("Geltone II" der Fa. NL Baroid)
1,9 g Diethanolamin
7,8 g organophiler Lignit ("Duratone" der Fa. NL Baroid)
7,8 g W/O-Emulgator ("EZ-mul NT" der Fa. NL Baroid)
326,2 g Baryt
12,5 g KCl
Das Vergleichsbeispiel arbeitet mit dieser Rezeptur, wobei als Esteröl der undestillierte Isobutylrübölester aus den Beispielen 9 bis 12 zum Einsatz kommt. In den nachfolgenden Beispielen 13 bis 15 wird der Spülungsformulierung jeweils ein ausgewählter stark oleophiler wasserunlöslicher Alkohol im Sinne der erfindungsgemäßen Lehre zugesetzt. Dabei gilt im einzelnen zu diesen Beispielen das folgende:
Beispiel 13: Zusatz von 2 g Docosanol, d. h. eines linearen C₂₂-Alkanols
Beispiel 14: Zusatz von 5 g eines EO/PO-Additionsproduktes an C₁₂₋₁₈-Alkoholschnitt natürlichen Ursprungs (Handelsprodukt "Lorol technisch" der Anmelderin) der nachfolgenden Zusammensetzung: G₁₂₋₁₈-Alkoholschnitt/3 EO/6 PO (Handelsprodukt "Dehyton LT 36" der Anmelderin)
Beispiel 15: Zusatz von 5 g eines EO/PO-Polyalkylenglycols mit einem mittleren Molekulargewicht von etwa 2000 (Handelsprodukt "Dehydran 240")
An den jeweiligen Ölspülungen der Beispiele 13 bis 15 und beim Vergleichsbeispiel werden die Viskositätswerte und zusätzlich der fluid-loss-Wert nach der HTHP-Methode bestimmt. Zur Bestimmung des HTHP-fluid-loss-Wertes siehe das erwähnte Handbuch der Fa. NL Baroid, London "Manual of drilling fluids technology", Unterkapitel "Oil mud technology", Kapitel PROPERTIES AND TESTlNG PROCEDURES "HTHP-filtrate".

Der Vergleich der Zahlenwerte zeigt, daß durch Zusatz geringer Mengen ausgewählter Alkohole eine Verbesserung der Rheologie, in allen Fällen aber eine deutliche Verminderung des HTHP-Filtrats, d. h. eine deutliche Verbesserung des fluid-loss-Wertes erzielt werden.

Im einzelnen gelten die folgenden Werte:

### Vergleichsbeispiel

| | ungealtertes Material | gealtertes Material |
|---|---|---|
| Plastische Viskosität (PV) | 61 | 47 |
| Fließgrenze (YP) | 37 | 41 |

| Gelstärke (lb/100 ft²) | | |
|---|---|---|
| 10 sec. | 24 | 17 |
| 10 min. | 26 | 19 |
| HTHP: 20 ml | | |

### Beispiel 13

| | ungealtertes Material | gealtertes Material |
|---|---|---|
| Plastische Viskosität (PV) | 54 | 39 |
| Fließgrenze (YP) | 48 | 31 |

| Gelstärke (lb/100 ft²) | | |
|---|---|---|
| 10 sec. | 27 | 14 |
| 10 min. | 29 | 15 |
| HTHP: 6 ml | | |

### Beispiel 14

| | ungealtertes Material | gealtertes Material |
|---|---|---|
| Plastische Viskosität (PV) | 45 | 42 |
| Fließgrenze (YP) | 36 | 36 |

| Gelstärke (lb/100 ft²) | | |
|---|---|---|
| 10 sec. | 20 | 18 |
| 10 min. | 23 | 19 |
| HTHP: 7 ml | | |

### Beispiel 15

| | ungealtertes Material | gealtertes Material |
|---|---|---|
| Plastische Viskosität (PV) | 70 | 36 |
| Fließgrenze (YP) | 52 | 27 |

| Gelstärke (lb/100 ft²) | | |
|---|---|---|
| 10 sec. | 35 | 13 |
| 10 min. | 34 | 14 |
| HTHP: 9 ml | | |

## Patentansprüche

1. Verwendung von im Temperaturbereich von 0 bis 5 °C fließ- und pumpfähigen ein- und/oder mehrwertigen Alkoholen natürlichen oder synthetischen Ursprungs, die bei Raumtemperatur eine Wasserlöslichkeit unter 5 Gew.-% aufweisen,
in der geschlossenen Ölphase von Bohrspülungen, die als W/O-Emulsion vorliegen, in der alkoholhaltigen Ölphase eine disperse wäßrige Phase sowie gewünschtenfalls weitere übliche Zusatzstoffe aufweisen und für die umweltschonende Erschließung von beispielsweise Erdöl- bzw. Erdgasvorkommen geeignet sind, wobei
a) die geschlossene Ölphase ausschließlich durch die genannten Alkohole gebildet wird,
oder
b) die genannten Alkohole - gelöst in ökologisch verträglichen wasserunlöslichen Ölen - einen substantiellen Anteil der geschlossenen Ölphase ausmachen und dabei diese zu mehr als 10 Gew.-% bilden oder dieser als Additiv in Mengen von 0,1 bis 10 Gew.-% zugesetzt sind.

2. Ausführungsform nach Anspruch 1, dadurch gekennzeichnet, daß zur Abmischung mit den Alkoholen als ökologisch verträgliche wasserunlösliche Öle Esteröle verwendet werden, die im Temperaturbereich von 0 bis 5 °C fließ- und pumpfähig sind.

3. Ausführungsform nach Ansprüchen 1 und 2, dadurch gekennzeichnet, daß als fließ- und pumpfähige Mischkomponente Esteröle verwendet werden, deren Ester-bildende Alkoholkomponenten sich von ein- und/oder zweiwertigen Alkoholen ableiten und dabei vorzugsweise so ausgewählt sind, daß auch im praktischen Einsatz unter partieller Esterverseifung keine toxikologischen, insbesondere keine inhalations-toxikologischen Gefährdungen ausgelöst werden.

4. Ausführungsform nach Ansprüchen 1 bis 3, dadurch gekennzeichnet, daß die Alkohole die geschlossene Ölphase zu mehr als 35 Gew.-%, vorzugsweise zu mehr als 70 Gew.-% und insbesondere zu mehr als 80 Gew.-%, bilden oder aber als Additiv der geschlossenen Ölphase in Mengen von 1 bis 5 Gew.-% zugesetzt sind.

5. Ausführungsform nach Ansprüche 1 bis 4, dadurch gekennzeichnet, daß ein- und/oder zweiwertige Alkohole oleophiler Beschaffenheit und/oder entsprechende Partialether von mehrwertigen, insbesondere zweiwertigen Alkoholen eingesetzt werden.

6. Ausführungsform nach Ansprüchen 1 bis 5, dadurch gekennzeichnet, daß Alkohole verwendet werden, die frei von aromatischen Molekülbestandteilen sind und sich vorzugsweise von geraden und/oder verzweigten Kohlenwasserstoffketten ableiten, die auch olefinisch ungesättigt sein können.

7. Ausführungsform nach Ansprüchen 1 bis 6, dadurch gekennzeichnet, daß einwertige Alkohole mit wenigstens 6 C-Atomen, vorzugsweise mit wenigstens 8 C-Atomen, verwendet werden, die geradkettig und/oder verzweigt und gewünschtenfalls wenigstens anteilsweise olefinisch ungesättigt sind und insbesondere bis zu 36 C-Atome aufweisen.

8. Ausführungsform nach Ansprüchen 1 bis 6, dadurch gekennzeichnet, daß oleophile, gegebenenfalls verzweigkettige Diole mit Hydroxylgruppen in Alpha,Omega-Stellung und/oder an benachbarten C-Atomen oder deren Partialether mit vorzugsweise einwertigen Alkoholen eingesetzt werden.

9. Ausführungsform nach Anspruch 8, dadurch gekennzeichnet, daß weitgehend wasserunlösliche Polyalkylenglycol-(Misch)-ether von insbesondere niederen Alkylenglycolen, vorzugsweise entsprechende Mischether von Ethylenoxid und Propylenoxid mit wenigstens einer freien Hydroxylgruppe als Additiv der geschlossenen Ölphase zugesetzt werden.

10. Ausführungsform nach Ansprüchen 1 bis 9, dadurch gekennzeichnet, daß die in der Bohrspülung eingesetzte geschlossene Ölphase Erstarrungswerte (Fließ- und Stockpunkt) unterhalb -5 °C, vorzugsweise unterhalb -10 °C und dabei Flammpunkte oberhalb 80 °C, vorzugsweise oberhalb 100 °C aufweist.

11. Ausführungsform nach Ansprüchen 1 bis 10, dadurch gekennzeichnet, daß die geschlossene Ölphase der Bohrspülung im Temperaturbereich von 0 bis 5 °C eine Brookfield(RVT)-Viskosität von nicht mehr als 55 mPas, vorzugsweise nicht über 45 mPas aufweist.

12. Ausführungsform nach Ansprüchen 1 bis 11, dadurch gekennzeichnet, daß die Alkohole in Bohrspülungen zum Einsatz kommen, die als W/O-Invertemulsion die feindisperse wäßrige Phase in Mengen von 5 bis 45 Gew.-%, vorzugsweise von 5 bis 25 Gew.-% enthalten.

13. Ausführungsform nach Ansprüchen 1 bis 12, dadurch gekennzeichnet, daß Alkohole eingesetzt werden, die frei von basischen Aminogruppen sind und vorzugsweise auch keine anderen reaktiven Gruppen, insbesondere Carboxylgruppen, enthalten.

14. Ausführungsform nach Ansprüchen 1 bis 13, dadurch gekennzeichnet, daß als wasserunlösliche Esteröle eine oder mehrere der folgenden Komponenten verwendet werden:
- Ester aus C₁₋₅-Monocarbonsäuren und ein- und/oder mehrwertigen Alkoholen,
- Ester aus Monocarbonsäuren synthetischen und/oder natürlichen Ursprungs mit 6 bis 11 C-Atomen und ein- und/oder mehrwertigen Alkoholen,
- Ester aus aliphatisch gesättigten Monocarbonsäuren mit 12 bis 16 C-Atomen und einwertigen Alkoholen mit 6 bis 12 C-Atomen,
- Ester aus olefinisch ein- und/oder mehrfach ungesättigten Carbonsäuren mit 16 bis 24 C-Atomen und einwertigen Alkoholen mit 6 bis 12 C-Atomen.

15. Ausführungsform nach Ansprüchen 1 bis 14, dadurch gekennzeichnet, daß die Alkohole in der Ölphase zur Verbesserung der fluid-loss-Eigenschaften zur Verbesserung der Emulgierfähigkeit und gegebenenfalls zur Verbesserung der Rheologie und/oder der Schmierfähigkeit der Bohrspülung eingesetzt werden.

16. Ausführungsform nach Ansprüchen 1 bis 15, dadurch gekennzeichnet, daß die alkoholhaltigen Bohrspülungen zusammen mit üblichen Alkalireserven, insbesondere mit Kalk, zum Einsatz kommen.

17. Ausführungsform nach Ansprüchen 1 bis 16, dadurch gekennzeichnet, daß beim Einsatz von Esterölen auf Basis von Carbonsäuren mit wenigstens 6 C-Atomen ein eventueller Kalkzusatz auf maximal 2 lb/bbl Bohrspülung begrenzt wird.

18. Invert-Bohrspülungen, die für eine umweltfreundliche Erschließung von Erdöl- bzw. Erdgasvorkommen geeignet sind und in einer geschlossenen Ölphase eine disperse wäßrige Phase zusammen mit üblichen weiteren Hilfsstoffen, vorzugsweise Emulgatoren, Beschwerungsmittel, fluid-loss-Additiven und Alkalireserven enthalten, dadurch gekennzeichnet, daß sie in der geschlossenen Ölphase ein- und/oder mehrwertige Alkohole natürlichen oder synthetischen Ursprungs, die im Temperaturbereich von 0 bis 5 °C fließ- und pumpfähig sind und bei Raumtemperatur eine Wasserlöslichkeit unter 5 Gew.-% aufweisen, enthalten, wobei
a) die geschlossene Ölphase ausschließlich durch die genannten Alkohole gebildet wird
oder
b) die genannten Alkohole - gelöst in ökologisch verträglichen wasserunlöslichen Ölen - einen substantiellen Anteil der geschlossenen Ölphase ausmachen und dabei diese zu mehr als 10 Gew.-% bilden oder dieser als Additiv in Mengen von 0,1 bis 10 Gew.-% zugesetzt sind,
und wobei die jeweilige Ölphase im Temperaturbereich von 0 bis 5 °C fließ- und pumpfähig ist und Flammpunkte oberhalb 80 °C aufweist.

19. Invert-Bohrspülung nach Anspruch 18, dadurch gekennzeichnet, daß sie als ökologisch verträgliche Öle Esteröle insbesondere aus Monocarbonsäuren und ein- und/oder zweiwertigen Alkoholen enthält.

20. Invert-Bohrspülung nach Ansprüchen 18 und 19, dadurch gekennzeichnet, daß sie eine Plastische Viskosität (PV) im Bereich von 10 bis 60 mPas und eine Fließgrenze (Yield Point YP) im Bereich von 5 bis 40 lb/100 ft² - jeweils bestimmt bei 50 °C - aufweist.

21. Invert-Bohrspülung nach Ansprüchen 18 bis 20, dadurch gekennzeichnet, daß bei der Mitverwendung von ökologisch verträglichen Ölen in der geschlossenen Ölphase Esteröle wenigstens ein Drittel, vorzugsweise den überwiegenden Anteil dieser ökologisch verträglichen Öle ausmachen.

22. Invert-Bohrspülung nach Ansprüchen 18 bis 21, dadurch gekennzeichnet, daß ihr disperser Wasseranteil 5 bis 45 Gew.-%, bevorzugt 10 bis 25 Gew.-% ausmacht und insbesondere Salz, vorzugsweise CaCl₂ und/oder KCl, gelöst enthält.

23. Invert-Bohrspülung nach Ansprüchen 18 bis 22, dadurch gekennzeichnet, daß die Ölphase des Invert-Schlamms im Temperaturbereich von 0 bis 5 °C eine Brookfield(RVT)-Viskosität unterhalb 50 mPas, vorzugsweise nicht über 40 mPas aufweist.

## Claims

1. The use of monohydric and/or polyhydric alcohols of natural or synthetic origin, which are flowable and pumpable at temperatures of 0 to 5°C and which have a solubility in water at room temperature of less than 5% by weight, in the continuous oil phase of drilling fluids which are present as w/o emulsions, contain a disperse aqueous phase and and, optionally, other typical additives in the alcohol-containing oil phase and are suitable for the ecologically safe development of, for example oil, and gas occurrences,
a) the continuous oil phase being formed solely by the alcohols mentioned
or
b) the alcohols mentioned - dissolved in ecologically safe water-insoluble oils - making up a substantial part of the continuous oil phase, i.e. forming more than 10% by weight of the continuous oil phase or being added thereto as an additive in quantities of 0.1 to 10% by weight.

2. The use claimed in claim 1, characterized in that ester oils flowable and pumpable at temperatures of 0 to 5°C are used as the ecologically safe water-insoluble oils for mixing with the alcohols.

3. The use claimed in claims 1 and 2, characterized in that the ester oils used as the flowable and pumpable mixing component are ester oils of which the ester-forming alcohol components are derived from monohydric and/or dihydric alcohols and are preferably selected so that no toxicological dangers and, in particular, no inhalation-toxicological dangers occur through partial ester hydrolysis, even in practical application.

4. The use claimed in claims 1 to 3, characterized in that the alcohols make up more than 35% by weight, preferably more than 70% by weight and, more preferably, more than 80% by weight of the continuous oil phase or are added to the continuous oil phase as an additive in quantities of 1 to 5% by weight.

5. The use claimed in claims 1 and 4, characterized in that oleophilic monohydric and/or dihydric alcohols and/or corresponding partial ethers of polyhydric, more particularly dihydric, alcohols are used.

6. The use claimed in claims 1 to 5, characterized in that the alcohols used are free from aromatic molecular constituents and are preferably derived from linear and/or branched hydrocarbon chains which may even be olefinically unsaturated.

7. The use claimed in claims 1 to 6, characterized in that the alcohols used are monohydric alcohols containing at least 6 and preferably at least 8 carbon atoms which are linear and/or branched and, if desired, may be at least partly olefinically unsaturated and, in particular, contain up to 36 carbon atoms.

8. The use claimed in claims 1 to 6, characterized in that oleophilic, optionally branched-chain diols containing hydroxyl groups in the alpha,omega-position and/or at adjacent carbon atoms or partial ethers thereof with preferably monohydric alcohols are used.

9. The use claimed in claim 8, characterized in that substantially water-insoluble polyalkylene glycol (mixed) ethers of, in particular, lower alkylene glycols, preferably corresponding mixed ethers of ethylene oxide and propylene oxide containing at least one free hydroxyl group, are added as additive to the continuous oil phase.

10. The use claimed in claims 1 to 9, characterized in that the continuous oil phase used in the drilling fluid has solidification points (flow point and pour point) below -5°C, preferably below -10°C, and flash points above 80°C and preferably above 100°C.

11. The use claimed in claims 1 to 10, characterized in that the continuous oil phase of the drilling fluid has a Brookfield (RVT) viscosity at 0 to 5°C of no more than 55 mPa.s and preferably no more than 45 mPa.s.

12. The use claimed in claims 1 to 11, characterized in that the alcohols are used in drilling fluids which, as a w/o invert emulsion, contain the finely disperse aqueous phase in quantities of 5 to 45% by weight and preferably in quantities of 5 to 25% by weight.

13. The use claimed in claims 1 to 12, characterized in that the alcohols used are free from basic amino groups and preferably contain no other reactive groups, particularly carboxyl groups.

14. The use claimed in claims 1 to 13, characterized in that one or more of the following components are used as the water-insoluble ester oils:
- esters of C₁₋₅ monocarboxylic acids and monohydric and/or polyhydric alcohols,
- esters of monocarboxylic acids of synthetic and/or natural origin containing 6 to 11 carbon atoms and monohydric and/or polyhydric alcohols,
- esters of aliphatically saturated monocarboxylic acids containing 12 to 16 carbon atoms and monohydric alcohols containing 6 to 12 carbon atoms,
- esters of mono- and/or polyolefinically unsaturated polycarboxylic acids containing 16 to 24 carbon atoms and monohydric alcohols containing 6 to 12 carbon atoms.

15. The use claimed in claims 1 to 14, characterized in that the alcohols are used in the oil phase to improve the fluid loss properties, to improve the emulsifiability and optionally to improve the rheology and/or lubricity of the drilling fluid.

16. The use claimed in claims 1 to 15, characterized in that the alcohol-containing drilling fluids are used together with typical alkali reserves, particularly lime.

17. The use claimed in claims 1 to 16, characterized in that, where ester oils based on carboxylic acids containing at least 6 carbon atoms are used, any addition of lime is limited to at most 2 lb/bbl drilling fluid.

18. Invert drilling fluids which are suitable for the ecologically safe development of oil and gas occurrences and which, in a continuous oil phase, contain a disperse aqueous phase together with typical other auxiliaries, preferably emulsifiers, weighting agents, fluid loss additives and alkali reserves, characterized in that they contain in the continuous oil phase monohydric and/or polyhydric alcohols of natural or synthetic origin which are flowable and pumpable at temperatures of 0 to 5°C and which have a solubility in water at room temperature below 5% by weight,
a) the continuous oil phase being formed solely by the alcohols mentioned
or
b) the alcohols mentioned - dissolved in ecologically safe water-insoluble oils - making up a substantial part of the continuous oil phase, i.e. forming more than 10% by weight of the continuous oil phase or being added thereto as an additive in quantities of 0.1 to 10% by weight,
and the particular oil phase being flowable and pumpable at temperatures of 0 to 5°C and having flash points above 80°C.

19. An invert drillimg fluid as claimed in claim 18, characterized in that it contains ester oils, more particularly ester oils of monocarboxylic acids and monohydric and/or dihydric alcohols, as the ecologically safe oils.

20. An invert drilling fluid as claimed in claims 18 and 19, characterized in that it has a plastic viscosity (PV) of 10 to 60 mPa.s and a yield point (YP) of 5 to 40 lb/100 ft², as determined in either case at 50°C.

21. An invert drilling fluid as claimed in claims 18 to 20, characterized in that, where ecologically safe oils are used in the continuous oil phase, ester oils make up at least one third and preferably the predominant part of the ecologically safe oils.

22. An invert drilling fluid as claimed in claims 18 to 21, characterized in that its disperse water content is 5 to 45% by weight and preferably 10 to 25% by weight and, in particular, contains dissolved salt, preferably CaCl₂ and/or KCl.

23. An invert drilling fluid as claimed in claims 18 to 22, characterized in that the oil phase of the invert mud has a Brookfield (RVT) viscosity at 0 to 5°C of less than 50 mPa.s and preferably not more than 40 mPa.s.

## Revendications

1. Utilisation de mono- et/ou de polyalcools, d'origine naturelle ou synthétique, coulants et pompables dans la plage de températures s'étendant de 0 à 5° C, qui présentent à température ambiante une solubilité dans l'eau inférieure à 5 % en poids, dans la phase huileuse fermée de boues de rinçage, qui sont sous la forme d'émulsion E/H et qui présentent dans la phase huileuse contenant de l'alcool, une phase aqueuse dispersée, ainsi que le cas échéant d'autres additifs usuels et qui sont appropriées à l'exploitation ménageant l'environnement, par exemple de gisements de pétrole ou de gaz, dans laquelle
a) la phase huileuse fermée est exclusivement constituée des alcools cités,
ou
b) les alcools cités - dissous dans des huiles insolubles dans l'eau compatibles avec l'environnement - représentent une proportion substantielle de la phase huileuse fermée et composent celle-ci à plus de 10 % en poids, ou sont ajoutés à celle-ci, comme additif, en quantités comprises entre 0,1 et 10 % en poids.

2. Forme de réalisation selon la revendication 1, caractérisée en ce que l'on utilise comme huiles insolubles dans l'eau compatibles avec l'environnement pour le mélange avec les alcools, des huiles-esters qui sont coulantes et pompables dans la plage de températures s'étendant de 0 à 5 °C.

3. Forme de réalisation selon les revendications 1 et 2, caractérisée en ce que l'on utilise comme composant de mélange coulant et pompable des huiles-esters dont les composants alcooliques formant des esters dérivent de mono- et/ou de dialcools et qui sont sélectionnées de préférence de telle manière que même l'utilisation pratique sous saponification partielle d'ester n'entraîne aucun risque toxicologique, en particulier par inhalation.

4. Forme de réalisation selon les revendications 1 à 3, caractérisée en ce que les alcools constituent la phase huileuse fermée à plus de 35 % en poids, de préférence à plus de 70 % en poids et en particulier, à plus de 80 % en poids ou sont ajoutés comme additif à la phase huileuse fermée, en quantités comprises entre 1 et 5 % en poids.

5. Forme de réalisation selon les revendications 1 à 4, caractérisée en ce que l'on utilise des mono- et/ou des dialcools à constitution oléophile et/ou des éthers partiels correspondants de polyalcools, en particulier de dialcools.

6. Forme de réalisation selon les revendications 1 à 5, caractérisée en ce que l'on utilise des alcools, qui sont exempts de constituants moléculaires aromatiques et qui sont dérivés de préférence de chaînes d'hydrocarbures droites et/ou ramifiées, qui peuvent également être à insaturation oléfinique.

7. Forme de réalisation selon les revendications 1 à 6, caractérisée en ce que l'on utilise des monoalcools comportant au moins 6 atomes de C, de préférence au moins 8 atomes de C, qui sont à chaîne droite et/ou ramifiée et le cas échéant, au moins partiellement à insaturation oléfinique et qui présentent en particulier jusqu'à 36 atomes de C.

8. Forme de réalisation selon les revendications 1 à 6, caractérisée en ce que l'on met en oeuvre des diols oléophiles, le cas échéant à chaîne ramifiée, présentant des groupes hydroxyle en position alpha, en position oméga et/ou sur des atomes de C voisins ou leurs éthers partiels, de préférence avec des monoalcools.

9. Forme de réalisation selon la revendication 8, caractérisée en ce que l'on ajoute comme additif à la phase huileuse fermée des éthers (mixtes) de polyalkylèneglycol, largement insolubles dans l'eau, en particulier d'alkylèneglycols inférieurs, de préférence des éthers mixtes correspondants d'oxyde d'éthylène et de propylène comportant au moins un groupe hydroxyle libre.

10. Forme de réalisation selon les revendications 1 à 9, caractérisée en ce que la phase huileuse fermée mise en oeuvre dans la boue de forage présente des valeurs de solidification (point d'écoulement et de congélation) inférieures à - 5 °C, de préférence inférieures à - 10 °C, avec des points d'éclair supérieurs à 80 °C, de préférence supérieurs à 100 °C.

11. Forme de réalisation selon les revendications 1 à 10, caractérisée en ce que la phase huileuse fermée de la boue de forage présente, dans la plage de températures s'étendant de 0 à 5 °C, une viscosité selon Brookfield (RVT) n'excédant pas 55 mPas, de préférence ne dépassant pas 45 mPas.

12. Forme de réalisation selon les revendications 1 à 11, caractérisée en ce que les alcools sont mis en oeuvre dans des boues de forage, qui renferment la phase aqueuse finement dispersée comme émulsion inversée E/H, en proportions comprises entre 5 et 45 % en poids, de préférence comprises entre 5 et 25 % en poids.

13. Forme de réalisation selon les revendications 1 à 12, caractérisée en ce que l'on utilise des alcools, qui sont exempts de groupes amino basiques et ne renferment de préférence également aucun autre groupe réactif, en particulier aucun groupe carboxyle.

14. Forme de réalisation selon les revendications 1 à 13, caractérisée en ce que l'on utilise comme huiles-esters insolubles dans l'eau, un ou plusieurs des composants suivants:
- esters d'acides monocarboxyliques de C₁ à C₅ et de mono-et/ou polyalcools,
- esters d'acides monocarboxyliques d'origine synthétique et/ou naturelle comportant 6 à 11 atomes de C et de mono-et/ou polyalcools,
- esters d'acides monocarboxyliques à saturation aliphatique comportant 12 à 16 atomes de C et de monoalcools comportant 6 à 12 atomes de C,
- esters d'acides carboxyliques à mono- et/ou polyinsaturation oléfinique comportant 16 à 24 atomes de C et de monoalcools comportant 6 à 12 atomes de C.

15. Forme de réalisation selon les revendications 1 à 14, caractérisée en ce que l'on utilise les alcools dans la phase huile use pour améliorer les propriétés de perte de fluide, de pouvoir émulsionnant et, le cas échéant, de la rhéologie et/ou du pouvoir lubrifiant de la boue de rinçage.

16. Forme de réalisation selon les revendications 1 à 15, caractérisée en ce que les boues de forage contenant de l'alcool sont utilisées conjointement avec des réserves d'alcalis usuelles, telles la chaux.

17. Forme de réalisation selon les revendications 1 à 16, caractérisée en ce qu'en cas d'emploi d'huiles-esters à base d'acides carboxyliques comportant au moins 6 atomes de C, l'addition éventuelle de chaux est limitée à une quantité maximale de 2 lb par bbl de boue de forage.

18. Bornes de forage inversées, qui sont appropriées à l'exploitation préservant l'environnement de gisements de pétrole ou de gaz naturel et qui renferment dans une phase huileuse fermée une phase aqueuse dispersée, conjointement avec d'autres adjuvants usuels, de préférence, des émulsifiants, alourdissants, additifs "perte de fluide" et réserves d'alcalis caractérisées en ce qu'elles renferment dans la phase huileuse fermée des mono- et/ou polyalcools d'origine naturelle ou synthétique, qui sont coulants et pompables dans la plage de températures s'étendant de 0 à 5 °C et qui présentent à température ambiante une solubilité dans l'eau inférieure à 5 % en poids, dans lesquelles
a) la phase huileuse fermée est exclusivement constituée des alcools cités,
ou
b) les alcools cités - dissous dans des huiles insolubles dans l'eau compatibles avec l'environnement - représentant une proportion substantielle de la phase huileuse fermée et composent celle-ci à plus de 10 % en poids ou sont ajoutés à celle-ci, comme additif, en quantités comprises entre 0,1 et 10 % en poids
la phase huileuse respective étant coulante et pompable dans la plage de températures s étendant de 0 à 5 °C et présentant des points d'éclair supérieurs à 80 °C.

19. Boue de forage inversée selon la revendication 18, caractérisée en ce qu'elle renferme comme huiles compatibles avec l'environnement des huiles-esters, en particulier à base d'acides monocarboxyliques et de mono- et/ou de dialcools.

20. Boue de forage inversée selon les revendications 18 et 19, caractérisée en ce qu'elle présente une viscosité plastique (PV) comprise dans l'intervalle de 10 à 60 mPas et une limite d'écoulement (Yield Point YP) située dans l'intervalle de 5 à 40 lb/100 ft², valeurs déterminées dans chaque cas à 50 °C.

21. Boue de forage inversée selon les revendications 18 à 20, caractérisée en ce qu'en cas de co-utilisation d'huiles compatibles avec l'environnement dans la phase huileuse fermée, des huiles-esters constituent au moins un tiers, de préférence la majeure partie de cette huile compatible avec l'environnement.

22. Boue de forage inversée selon les revendications 18 à 21, caractérisée en ce que sa fraction d'eau dispersée représente 5 à 45 % en poids, de préférence 10 à 25 % en poids et renferme en particulier du sel sous forme dissoute, de préférence du CaCl₂ et/ou du KCl.

23. Boue de forage inversée selon les revendications 18 à 22, caractérisée en ce que la phase huileuse de la boue inversée présente dans la plage de températures s'étendant de 0 à 5 °C un viscosité selon Brookfield (RVT) inférieure à 50 mPas, de préférence ne dépassant pas 40 mPas.
